(19) Europäisches Patentamt

European Patent Office

Office européen des brevets

(11) **EP 0 805 071 A2**

## (12) EUROPÄISCHE PATENTANMELDUNG

(43) Veröffentlichungstag:
05.11.1997 Patentblatt 1997/45

(51) Int. Cl.⁶: **B60R 21/26**

(21) Anmeldenummer: 97106960.4

(22) Anmeldetag: 26.04.1997

(84) Benannte Vertragsstaaten:
**DE ES FR GB IT PT SE**

(30) Priorität: **04.05.1996 DE 19618028**

(71) Anmelder: **MST Automotive GmbH Automobil-Sicherheitstechnik 63743 Aschaffenburg (DE)**

(72) Erfinder:
• **Huber, Roland**
**78713 Schramberg (DE)**
• **Sütterlin, Klaus**
**79331 Teningen-Köndringen (DE)**

(74) Vertreter: **Fuchs Mehler Weiss Patentanwälte Abraham-Lincoln-Strasse 7 65189 Wiesbaden (DE)**

### (54) Vorrichtung zum Aufblasen eines Airbags (III)

(57) Vorgeschlagen wird eine Vorrichtung zum schnellen Aufblasen eines Airbags mit einem Gehäuse (1) in dem eine Mischkammer (2) mit wenigstens einer Auslaßöffnung (3) zum Airbag ausgebildet ist, einem Druckgasbehälter (4), dessen Auslaßöffnung (5) durch eine Berstscheibe (6) verschlossen ist und einem Treibsatzbehälter (7) mit einer Treibladung (8) und einem Zünder (9), dessen Auslaßöffnung (10) durch ein Projektil (11) verschlossen ist. Druckgasbehälter (4) und Treibsatzbehälter (7) sind so angeordnet, daß das Projektil (11) in Richtung Berstscheibe (6) beschleunigt wird, die Berstscheibe (6) zerstört wird und das Druckgas sowie das Treibgas in die Mischkammer (2) strömen können, wenn die Treibladung (8) gezündet wird.

Die Vorrichtung ist dadurch gekennzeichnet, daß im Gehäuse (1) zwischen dem Treibsatzbehälter (7) und der Mischkammer (2) ein kurzer Projektilführungskanal (14) vorgesehen ist, daß der Auslaß des Treibsatzbehälters (7) als genau bemessene, in den Projektilführungskanal (14) mündende Drosselbohrung (13) ausgebildet ist und daß das Projektil (11) im Projektilführungskanal (14) in Gasströmungsrichtung gesehen, unmittelbar hinter der Drosselbohrung (13) angeordnet ist.

Fig. 1

EP 0 805 071 A2

## Beschreibung

Die Erfindung betrifft Vorrichtung zum schnellen Aufblasen eines Airbags mit

- einem Gehäuse in dem eine Mischkammer mit wenigstens einer Auslaßöffnung zum Airbag ausgebildet ist,

- einem im Gehäuse gehaltenen Druckgasbehälter, dessen Auslaßöffnung durch eine Berstscheibe verschlossen ist und

- einem im Gehäuse gehaltenen Treibsatzbehälter mit einer Treibladung und einem Zünder, dessen Auslaßöffnung durch ein Projektil verschlossen ist,

- wobei Druckgasbhälter und Treibsatzbehälter so angeordnet sind, daß das Projektil in Richtung Berstscheibe beschleunigt wird, die Berstscheibe zerstört wird und das Druckgas und das Treibgas in die Mischkammer strömen können, wenn die Treibladung gezündet wird,

dadurch gekennzeichnet, daß im Gehäuse zwischen dem Treibsatzbehälter und der Mischkammer ein kurzer Projektilführungskanal vorgesehen ist, daß der Auslaß des Treibsatzbehälters als genau bemessene, in den Projektilführungskanal mündende Drosselbohrung ausgebildet ist und daß das Projektil im Projektilführungskanal in Gasströmungsrichtung gesehen unmittelbar hinter der Drosselbohrung angeordnet ist.

Bei derartigen Aufblassystemen (vergleiche deutsche Patentanmeldungen P 19545052 und P 19545077) dient die Treibladung zur Beschleunigung des Projektils und zur Bildung eines Gasvolumens, das zusammen mit dem Volumen des Druckgases die Airbag-Füllung ergibt. Je größer das aus der Treibladung erzeugte Gasvolumen ist, desto kleiner kann der Druckgasbehälter ausgelegt werden, was bei beengten Einbauverhältnissen von Bedeutung sein kann.

Die Treibladung wird in jedem Fall so groß bemessen, daß mit der daraus entstehenden Menge an heißen Reaktionsgasen die Abkühlung des expandierenden Druckgases kompensiert wird bzw. daß die Airbag-Füllung eine vorgegebene Temperatur erreicht. Die dazu benötigte Treibladung ist wesentlich größer als diejenige, die erforderlich wäre, wenn nur das Projektil beschleunigt werden müßte.

Ein weiterer maßgebender Parameter für die Auslegung derartiger Aufblassysteme ist das Bauvolumen, das sich nach den Einbauverhältnissen richten muß. Unter diesem Aspekt wird das den Druckgasbehälter und den Treibsatzbehälter aufnehmende Gehäuse möglichst kompakt ausgeführt, d.h. der Abstand zwischen den beiden Behältern ist sehr kurz und die dazwischenliegende Mischkammer sehr klein. Das Projektil bildet gleichzeitig den Verschluß des Treibsatzbehälters und die begrenzende Wandung der Mischkammer in diesem Bereich. Eine nennenswerte Projektilführung ist nicht vorgesehen.

Daraus ergibt sich einmal das Problem, daß die Bewegungsrichtung des Projektils einen gewissen Streubereich aufweist, so daß bei der Auslegung der Berstscheibe für den Druckgasbehälter berücksichtigt werden muß, daß sie auch bei randseitigem Einschlag des Projektils sicher zerstört wird.

Zum anderen ergibt sich aus den genannten Rahmenbedingungen die Schwierigkeit, daß das Abbrennen der Treibladung abrupt unterbrochen werden kann, wenn das Projektil aus seiner Halterung heraus beschleunigt wird und schlagartig einen großen Querschnitt freigibt. Diese Querschnittfreigabe ist mit einem starken Druckabfall im Treibsatzbehälter verbunden, der bei den für diese Zwecke zugelassenen Treibladungsmitteln zur Unterbrechung der chemischen Reaktionen führen kann. Versuche haben gezeigt, daß die Zeit zur Beschleunigung des Projektils in der Größenordnung von 20% der Gesamtbrenndauer liegt, d.h. daß bei gleicher Verbrennungsrate die Treibladung fünfmal so groß ist, wie diejenige, die zum Aufbrechen der Berstscheibe im Druckgasbehälter mittels des Projektils nötig ist.

Der Erfindung liegt die Aufgabe zugrunde, eine Vorrichtung der eingangs genannten Art zu schaffen, bei der diese Schwierigkeiten nicht auftreten können und bei der insbesondere ein vollständiger Abbrand der - bezogen auf die Projektilbeschleunigung - stark überdimensionierten Treibladung gewährleistet werden kann, ohne daß damit ein kritischer Zuwachs des Bluvolumens verbunden ist.

Zur Lösung dieser Aufgabe wird erfindungsgemäß vorgeschlagen, daß im Gehäuse zwischen dem Treibsatzbehälter und der Mischkammer ein kurzer Projektilführungskanal vorgesehen ist, daß der Auslaß des Treibsatzbehälters als genau bemessene, in den Projektilführungskanal mündende Drosselbohrung ausgebildet ist und daß das Projektil in Projektilführungskanal in Gasströmungsrichtung gesehen unmittelbar hinter der Drosselbohrung angeordnet ist.

Diesen Maßnahmen liegt die Erwägung zugrunde, daß zumindest eine kurze Projektilführung vorgesehen werden muß, um den Streuwinkel soweit einzuschränken, daß das Projektil die Berstscheibe sicher zerstört, ohne daß bei deren Auslegung zu große Risiken eingegangen werden müssen. Ferner wurde erkannt, daß der vollständige Abbrand der Treibladung gewährleistet werden kann, wenn zwischen dem Innenraum des Treibsatzbehälters und dem Projektil bzw. der Mischkammer eine genau bemessene Drosselbohrung vorgesehen wird, die verhindert, daß ein plötzlicher Druckabfall nach dem Austreten des Projektils aus der Führung und der damit verbundenen schlagartigen Freigabe eines größeren Ausströmquerschnitts auf den Innenraum des Treibsatzbehälters durchschlagen kann. Wichtig ist ferner, daß das Projektil im Projektilführungskanal unmittelbar hinter der Drosselbohrung angeordnet wird, weil damit das dem Treibgas zur Verfügung stehende Volumen während der Projektilbewegung im Projektilführungskanal über den größtmöglichen Weg bzw. die längstmögliche Dauer stetig vergrößert wird, was dem Ablauf der Verbrennung zugute kommt.

Selbstverständlich wird der Projektilführungskanal stets so lang wie irgend möglich bemessen, wobei die jeweiligen Einbauverhältnisse die Obergrenze bestimmen. Im Hinblick auf die nur bei großen Serien mögliche, rationelle Herstellung können Vorrichtungen dieser Art jedoch nicht nur für einen konkreten Anwendungsfall ausgelegt werden, bei dem das Einbauvolumen bekannt ist. Es wird vielmehr meistens versucht, die Vorrichtung möglichst klein zu halten, damit sie für eine große Zahl unterschiedlicher Anwendungsfälle brauchbar ist. Das wirkt sich unmittelbar auf die realisierbare Länge des Projektilführungskanals aus.

Vorteilhafte Weiterbildungen des Erfindungsgedankens und zweckmäßige Alternativen sind in den Unteransprüchen 2 bis 7 beschrieben. Weitere Einzelheiten werden anhand der in den Figuren 1 bis 6 dargestellten Ausführungsbeispiele näher erläutert. Es zeigen:

Fig. 1    einen Längsschnitt durch eine erste Ausführungsform der Erfindung,

Fig. 2    einen vergrößerten Ausschnitt aus Fig. 1,

Fig. 3    einen Ausschnitt einer zweiten Ausführungsform,

Fig. 4    einen Ausschnitt einer dritten Ausführungsform,

Fig. 5    einen Ausschnitt einer vierten Ausführungsform und

Fig. 6    ein Diagramm des Druckverlaufs P = f(t) .

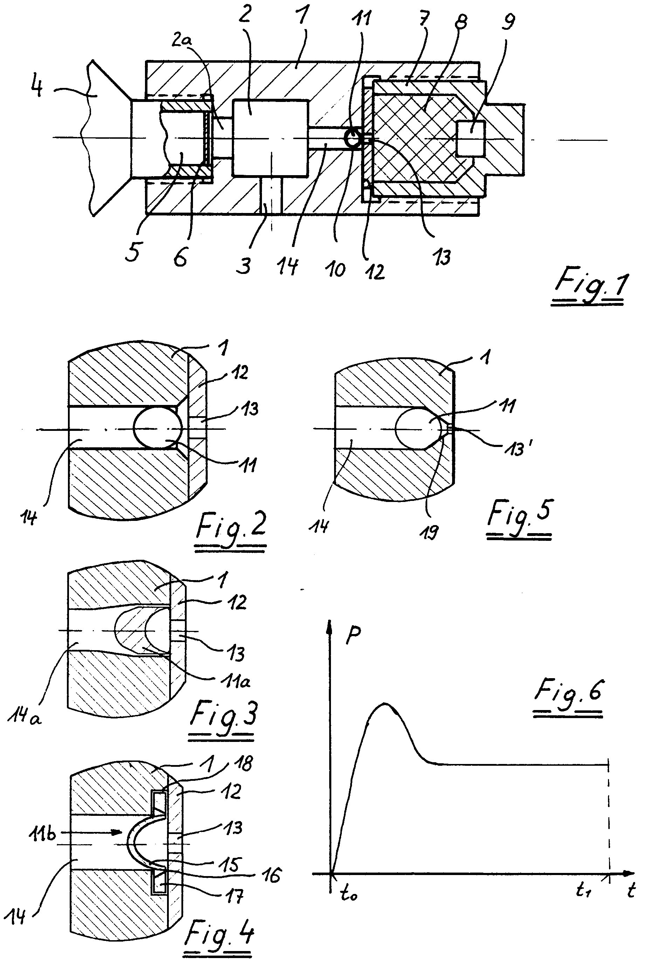

Das Ausführungsbeispiel der Erfindung gemäß Fig. 1 besitzt ein etwa rohrförmiges Gehäuse 1, in dem eine Mischkammer 2 mit einem Auslaß 3 zum Airbag ausgebildet ist. Zweckmäßigerweise werden mehrere derartige Auslässe 3 vorgesehen, damit der Airbag schneller und gleichmäßiger gefüllt werden kann. Solche Auslässe können radial (wie dargestellt) und/oder axial angeordnet werden, wodurch die Vorrichtung an unterschiedliche Anwendungsfälle und Einbauverhältnisse angepaßt werden kann. Von links ist ein Druckgasbehälter 4 mit einer durch eine Berstscheibe 6 verschlossenen Auslaßöffnung 5 in das Gehäuse 1 eingeschraubt, wobei sich der Rand des Druckgasbehälters 4 im Gehäuse 1 konzentrisch zu einem Durchlaß 2a abstützt.

Gegenüber vom Druckgasbehälter 4 ist ein Treibsatzbehälter 7 in das Gehäuse 1 eingeschraubt, der eine Treibladung 8 und einen Zünder 9 beinhaltet, der über nicht dargestellte elektrische Leitungen in an sich bekannter Weise aktiviert werden kann. Mit dem Treibsatzbehälter 7 wird eine Düsenscheibe 12 mit einer genau bemessenen Drosselbohrung 13 gegen das Gehäuse 1 angedrückt, wobei die Drosselbohrung 13 konzentrisch zu einem Projektilführungskanal 14 angeordnet ist. In den Projektilführungskanal 14 ist ein Projektil 11 in Form einer Kugel mit Übermaß eingepreßt, wodurch der Auslaß 10 für die im Treibsatzbehälter erzeugten gasförmigen Reaktionsprodukte verschlossen ist. Bei einer Zündung verbrennt die Treibladung 8, wodurch sich der Druck im Treibsatzbehälter rasch so weit erhöht, daß die im Projektilführungskanal 14 eingeklemmte Kugel 11 in Richtung Berstscheibe beschleunigt wird. Nachdem die Kugel 11 den Projektilführungskanal 14 verlassen hat, fällt der Druck im Projektilführungskanal 14 rasch auf einen Wert ab, der durch die Bemessung der Drosselbohrung 13 beeinflußt werden kann. Gleichzeitig wird durch die Drosselbohrung dafür gesorgt, daß sich der starke Druckabfall nicht bis in den Treibgasbehälter 7 fortsetzen kann, so daß der vollständige Abbrand der Treibladung möglich ist. Nach der Zerstörung der Berstscheibe 6 strömt das Druckgas von links in die Mischkammer 2 ein, während die gasförmigen Reaktionsprodukte der Treibladung über den Projektilführungskanal 14 von rechts in die Mischkammern einströmen. Hier findet eine Mischung der heißen Verbrennungsgase mit dem sich in Folge der Expansion abkühlenden Druckgas statt. Dadurch wird vermieden, daß ggf. in der Vorrichtung vorhandene Luftfeuchtigkeit gefriert und in Form fester Partikel in den Airbag transportiert wird. Durch eine Abstimmung von Druckgasmenge und Treibladungsmenge kann Einfluß auf die Mischtemperatur der Gase genommen werden.

Die Verbindung zwischen Gehäuse 1 und Druckgasbehälter 4 bzw. Treibsatzbehälter 7 kann alternativ auch durch Schweißen oder Löten erfolgen.

In Fig. 2 ist der Bereich um die Kugel 11 aus Fig. 1 noch einmal vergrößert dargestellt. Man erkennt das Gehäuse 1, die Düsenscheibe 12, die Drosselbohrung 13 und den Projektilführungskanal 14. Dieser kann im Anfangsbereich trichterförmig gestaltet sein, was das Einführen der Kugel 11 erleichtert.

Fig. 3 zeigt einen vergrößerten Ausschnitt ähnlich Fig. 2, jedoch mit einem napfförmigen Projektil 11a und einem zur Mischkammer hin verjüngten Projektilführungskanal 14a. Düsenscheibe 12 und Drosselbohrung 13 sind gegenüber Fig. 2 nicht verändert.

Das gilt auch für Fig. 4, bei der ein projektilbildendes Berstsystem 11b vorgesehen ist, das einen napfförmigen Teil 15, eine ringförmige Halterung 17 und einen Materialbereich 16 geringer Festigkeit (Sollbruchstelle) umfaßt. Der Projektilführungskanal 14 ist wie in Fig. 2 zylindrisch ausgeführt und hat im Anfangsbereich einen Rezeß 18 zur Aufnahme der ringförmigen Halterung 17.

Fig. 5 zeigt als vergrößerten Ausschnitt eine Ausführungsform ohne Düsenscheibe. Die Drosselbohrung 13' ist hier im Gehäuse 1 ausgebildet. Nach links anschließend an die Drosselbohrung 13' ist ein konischer Bereich 19 vorgesehen, der einen Übergang zum Durchmesser der Drosselbohrung 13' auf den Durchmesser des Projektilführungskanals 14 bildet. In den Projektilführungskanal 14 ist von links her wieder eine Kugel 11 mit definiertem Übermaß eingepreßt.

In Fig. 6 ist der typische bzw. angestrebte Verlauf des Drucks im Treibsatzbehälter 7 über der Brennzeit aufgetragen. Nach der Zündung bei $t_0$ steigt der Druck sehr rasch bis auf einen Maximalwert an, um dann auf einen Druck abzufallen, der bis zum Brennende bei $t_1$ im wesentlichen konstant bleibt. Durch die definierte Drosselbohrung 13 bzw. 13' wird erreicht, daß im Treibsatzbehälter 7 nach der Anfangsphase im wesentlichen konstante Verhältnisse bestehen, die einen gleichmäßigen, vollständigen und sicheren Abbrand der Treibladung gewährleisten. Mittels des Übermaßes, mit dem das Projektil in den Projektilführungskanal einerseits eingepreßt wird, kann das Druckmaximum festgelegt werden. Andererseits können durch Wahl des Durchmessers der Drosselbohrung der maximale Druck und der konstante Druck während der Restbrennzeit beeinflußt werden. Von der Größe der Treibladung ist nicht nur die Gesamtbrenndauer abhängig, sondern auch das Verhältnis des Zeitabschnitts bis zum Erreichen des maximalen Druckes zum restlichen Zeitabschnitt bis Brennende. Wie bereits ausgeführt, kann so auch Einfluß genommen werden auf die Gasvolumenanteile aus dem Druckgasbehälter und aus der Treibladung. Über dieses Verhältnis schließlich, kann die Temperatur des in den Airbag gelangenden Gasgemisches festgelegt werden.

**Patentansprüche**

1. Vorrichtung zum schnellen aufblasen eines Airbags mit

   - einem Gehäuse (1), in dem eine Mischkammer (2) mit wenigstens einer Auslaßöffnung (3) zum Airbag ausgebildet ist,

   - einem im Gehäuse (1) gehaltenen Druckgasbehälter (4), dessen Auslaßöffnung (5) durch eine Berstscheibe (6) verschlossen ist und

   - einem im Gehäuse (1) gehaltenen Treibsatzbehälter (7) mit einer Treibladung (8) und einem Zünder (9), dessen Auslaßöffnung (10) durch ein Projektil (11) verschlossen ist,

   - wobei Druckgasbhälter (4) und Treibsatzbehälter (7) so angeordnet sind, daß das Projektil (11) in Richtung Berstscheibe (6) beschleunigt wird, die Berstscheibe (6) zerstört wird und das Druckgas und das Treibgas in die Mischkammer strömen können, wenn die Treibladung (8) gezündet wird,

   dadurch gekennzeichnet, daß im Gehäuse (1) zwischen dem Treibsatzbehälter (7) und der Mischkammer (2) ein kurzer Projektilführungskanal (14) vorgesehen ist, daß der Auslaß des Treibsatzbehälters (7) als genau bemessene, in den Projektilführungskanal (14) mündende Drosselbohrung (13) ausgebildet ist und daß das Projektil (11) im Projektilführungskanal (14) in Gasströmungsrichtung gesehen, unmittelbar hinter der Drosselbohrung (13) angeordnet ist.

2. Vorrichtung nach Anspruch 1, dadurch gekennzeichnet, daß die Drosselbohrung (13) in einer gesonderten Düsenscheibe (12) ausgebildet ist.

3. Vorrichtung nach Anspruch 1, dadurch gekennzeichnet, daß die Drosselbohrung (13') im Gehäuse (1) ausgebildet ist.

4. Vorrichtung nach einem der Ansprüche 1 bis 3, dadurch gekennzeichnet, daß der Projektilführungskanal (14) ein Verhältnis Länge zu Durchmesser von wenigstens 2,5 hat.

5. Vorrichtung nach einem der Ansprüche 1 bis 4, dadurch gekennzeichnet, daß das Projektil aus einer Kugel (11) besteht, die mit definiertem Übermaß in den der Projektilführungskanal (14) eingedrückt ist.

6. Vorrichtung nach einem der Ansprüche 1 bis 4, dadurch gekennzeichnet, daß das Projektil (11a) napfförmig ausgebildet ist und daß sich der Projektilführungskanal (14a) in Richtung Mischkammer (2) verjüngt.

7. Vorrichtung nach einem der Ansprüche 1 bis 4, dadurch gekennzeichnet, daß ein projektbildendes Berstsystem (11b) vorgesehen ist, mit einem zentralen, napfförmigen Teil (15) und einer ringförmigen Halterung (17), die mit dem napfförmigen Teil (15) über einen Materialbereich (16) geringer Festigkeit (Sollbruchstelle) verbunden und zwischen Gehäuse (1) und Düsenscheibe (12) eingespannt ist.

*Fig.1*

*Fig.2*

*Fig.5*

*Fig.3*

*Fig.6*

*Fig.4*